(19) Europäisches Patentamt
European Patent Office
Office européen des brevets

(11) Veröffentlichungsnummer: **0 162 386**
**B1**

(12) **EUROPÄISCHE PATENTSCHRIFT**

(45) Veröffentlichungstag der Patentschrift: **06.02.91**

(51) Int. Cl.⁵: **C 09 B 62/006**, D 06 P 3/10, D 06 P 3/66

(21) Anmeldenummer: **85105767.9**

(22) Anmeldetag: **10.05.85**

# (54) Azoreaktivfarbstoffe.

(30) Priorität: **23.05.84 DE 3419138**

(43) Veröffentlichungstag der Anmeldung:
**27.11.85 Patentblatt 85/48**

(45) Bekanntmachung des Hinweises auf die Patenterteilung:
**06.02.91 Patentblatt 91/06**

(84) Benannte Vertragsstaaten:
**CH DE FR GB IT LI**

(56) Entgegenhaltungen:
**CH-E-mi cal ab**
**CH-E-mi cal ab**
**CH-E-mi cal ab**
**CH-E-mi cal ab**
**CH-E-mi cal ab**
**CH-E-mi cal ab**
**CH-A- 473 202**
**DE-A-1 808 587**
**FR-A-1 546 089**
**FR-A-2 024 762**
**RU-S-si an che**

(73) Patentinhaber: **BASF Aktiengesellschaft**
**Carl-Bosch-Strasse 38**
**D-6700 Ludwigshafen (DE)**

(72) Erfinder: **Krueger, Heinz, Dr.**
**Berliner Platz 12**
**D-6703 Limburgerhof (DE)**
Erfinder: **Schaffer, Ortwin, Dr.**
**Bruesseler Ring 43**
**D-6700 Ludwigshafen (DE)**
Erfinder: **Thomas, Michael, Dr.**
**Am Wingertsberg 4**
**D-6719 Weisenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft Verbindungen der Formel I

$$\left[ R^1-\underset{\substack{|\\ SO_2-R}}{N}-D-N=N-\left[A-N=N\right]_n-B \right]_p X ,$$

in der

n die Zahlen 0 oder 1,
p die Zahlen 1 oder 2,
A den Rest einer Kupplungskomponente,
B den Rest einer Diazo- oder Kupplungskomponente,
D den Rest einer Diazokomponente,
R Alkyl, Alkenyl, Cycloalkyl, Aryl oder disubstituiertes Amino,
$R^1$ Wasserstoff oder Alkyl und
X mindestens einen reaktiven Rest bedeuten, wobei X für p = 2 der Formel $—X^1—G—X^2—$ entspricht, in der $X^1$ und $X^2$ reaktive Reste und G ein Brückenglied, das sich von einem aliphatischen, aromatischen oder araliphatischen Diamin ableitet, sind.

Kupplungskomponenten $AH_2$ leiten sich beispielsweise von methylenaktiven Verbindungen, Benzol- oder Naphthalinderivaten ab, die noch durch Hydroxy, Amino, Hydroxysulfonyl, Chlor, Methyl, Ethyl, Methoxy, Ethoxy, $C_1$- bis $C_4$-Alkanoylamino, Ureido, N-alkylsubstituiertes Ureido oder N-Phenylureido substituiert sein können.

Einzelne Kupplungskomponenten sind beispielsweise:

1-(2'-Aminophenyl)-, 1-(3'-Aminophenyl)- oder 1-(4'-Aminophenyl)-3-carboxypyrazolon-5, 1-(3'-Aminophenyl)- oder 1-(4'-Aminophenyl)-3-methylpyrazolon-5, 1-(5'-Amino-2'-sulfophenyl)- oder 1-(4'-Amino-2'-sulfophenyl)-3-carboxypyrazolon-5, 1-(2'-Aminoethyl)-, 1-(3'-Aminopropyl)-, 1-(2'-Aminopropyl)-4-methyl-5-cyano-6-hydroxypyridon-2, 1-(2'-Aminoethyl)-, 1-(3'-Aminopropyl)- oder 1-(2'-Aminopropyl)-4-methyl-5-aminocarbonyl-6-hydroxypyridon-2, 3-Methyl- oder 3-Methoxyanilin, 2,5-Dimethyl- oder 2,5-Dimethoxyanilin, 2-Methoxy-5-methylanilin, 2-Methoxy-5-chloranilin, 2-Methyl-5-acetylaminoanilin, 2-Methoxy-5-acetylaminoanilin, 3-Acetylamino-, 3-Propionylamino-, 3-Butyrylamino-, 3-Pivaloylamino-, 3-Benzoylamino- oder 3-(3'-Sulfopropionylamino)-anilin, 3-Aminocarbonylaminoanilin-, 3-Methylaminocarbonylamino-, 3-Ethylaminocarbonylamino-, 3-n-Propylaminocarbonylamino-, 3-iso-Propylaminocarbonylamino-, 3-Butylaminocarbonylamino-, 3-Cyclohexylaminocarbonylamino-, 3-Phenylaminocarbonylaminoanilin, 3-Methansulfonylaminoanilin, 3-Dimethylaminosulfonylaminoanilin, Anilin-ω-methansulfonsäure, N-Methylanilin, 1-Aminonaphthalin, 1-Aminonaphthalin-6-, -7- oder -8-sulfonsäure, 1-Aminonaphthalin-6,8-disulfonsäure, 1-Amino-5-hydroxynaphthalin-7-sulfonsäure, 1-Amino-8-hydroxynaphthalin-4-sulfonsäure, 1-Amino-8-hydroxynaphthalin-2,4-, -3,6- oder -4,6-disulfonsäure, 2-Amino-5-hydroxynaphthalin-7-sulfonsäure, 2-Amino-8-hydroxynaphthalin-6-sulfonsäure, 2-Amino-8-hydroxynaphthalin-3,6-disulfonsäure, 2-Amino-5-hydroxynaphthalin-1,7-disulfonsäure oder 2-N-Methylamino-8-hydroxynaphthalin-6-sulfonsäure.

Wenn A eine zweifach kuppelnde Komponente ist, leitet sich B von einer Diazokomponente ab. Solche Diazokomponenten stammen vorwiegend aus der Anilin- oder Aminonaphthalinreihe und können durch Hydroxysulfonyl, Hydroxycarbonyl, Methyl, Methoxy, Chlor, Fluor, —NH—X, Nitro oder Acylamino substituiert sein.

Einzelne Komponente für B sind beispielsweise:

1,3-Diaminobenzol, 1,4-Diaminobenzol, 2,4-Diaminotoluol, 2,6-Diaminotoluol, 2,4-Diaminobenzolsulfonsäure, 2,5-Diaminobenzolsulfonsäure, 3,5-Diamino-2-methoxybenzolsulfonsäure, 2,5-Diamino-4-methoxybenzolsulfonsäure, 2,4-Diamino-5-methylbenzolsulfonsäure, 2,4-Diamino-5-methoxybenzolsulfonsäure, 3,5-Diamino-4-methylbenzolsulfonsäure, 2-Chlor-3,5-diaminobenzolsulfonsäure, 4,6-Diaminobenzol-1,3-disulfonsäure, 2,5-Diaminobenzol-1,4-disulfonsäure, 3-Chlor-4,6-diaminobenzolsulfonsäure, 4,7-Diaminonaphthalin-1-sulfonsäure, 2,6-Diaminonaphthalin-4,8-disulfonsäure, 3,7-Diaminonaphthalin-1-sulfonsäure, 5-Aminomethyl-2-aminonaphthalin-1-sulfonsäure, 5-N-Methylaminomethyl-2-aminonaphthalin-1-sulfonsäure, 4-Aminobenzylamin, 5-Amino-2-methylbenzylamin, 2-Amino-5-aminomethylbenzolsulfonsäure, 2-Amino-5-N-methylaminomethylbenzolsulfonsäure, 2-Amino-4-N-methylaminomethylbenzolsulfonsäure oder 2-Amino-4-aminomethyl-5-methylbenzolsulfonsäure.

Einzelne Reste R sind beispielsweise:

Methyl, Ethyl, Propyl, Butyl, Benzyl, Allyl, Cyclohexyl, $C_6H_5$, $C_6H_4Cl$, $C_6H_4CH_3$, $C_6H_4OCH_3$, $N(CH_3)_2$ oder $N(C_2H_5)_2$.

Brückenglieder G stammen von aliphatischen, aromatischen oder araliphatischen Diaminen, einzelne

Diamine sind beispielsweise: 1,2-, 1,3- oder 1,4-Diaminobenzol, 2,4- oder 2,6-Diaminotoluol, 4-Chlor-, 4-Methyl-, 4-Methoxy-, 4-Hydroxycarbonyl oder 4-Sulfo-1,2-diaminobenzol, 3,4-Dichlor- oder 3,4-Dimethyl-1,2-diaminobenzol, 2,4- oder 2,5-Diaminobenzolsulfonsäure, 3,5-Diamino-4-methylbenzolsulfonsäure, 1,5-Diaminonaphthalin, 2,6-Diaminonaphthalin-1,5- oder 4,8-disulfonsäure, 4,4'-Diaminodiphenyl-3-sulfonsäure, 4,4'-Diaminodiphenyl-2,2'-disulfonsäure, 4,4'-Diaminodiphenylstilben-3,3'-disulfonsäure, 1,2-Diaminoethan, 1,3-Diaminopropan, Piperazin, 4-Aminobenzylamin oder 2-Aminobenzylamin.

Alkylreste $R^1$ sind z.B.:

Methyl oder Ethyl, bevorzugt ist $R^1$ Wasserstoff.

Die reaktiven Reste X stammen beispielsweise aus der Triazin-, 4-Fluorpyridazon-, Pyrimidin-, Pyridazin-, Chinoxalin-, Chinazolin-, Phthalazin-, Thiazol-, Benzthiazol-, Vinylsulfon-, Acryloyl-, Halogenpropionyl- oder Halogenacetylreihe oder von Säuren des Phosphors ab.

Die Reste D entsprechen vorzugsweise den Formeln

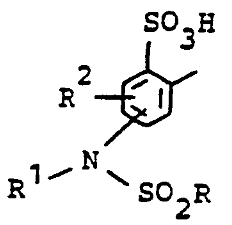 oder 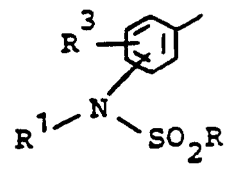 ,

in denen

$R^2$ Wasserstoff oder $SO_3H$,

$R^3$ Wasserstoff, Cl, $CH_3$, $OCH_3$ oder $SO_3H$ sind und

R und $R^1$ die angegebene Bedeutung haben.

Die Herstellung der Verbindungen der Formel I erfolgt nach üblichen Methoden, repräsentative Verfahren sind in den Beispielen beschrieben, in denen sich Angaben über Teile und Prozente, sofern nicht anders vermerkt, auf das Gewicht beziehen.

Die Verbindungen der Formel I eignen sich als Reaktivfarbstoffe zum Färben von amino- und hydroxygruppenhaltigen Substraten wie Leder, Seide, Wolle, Zellwolle und insbesonders Baumwolle.

Besonders wertvolle braune und marineblaue Farbstoffe entsprechen den allgemeinen Formeln Ia und Ib

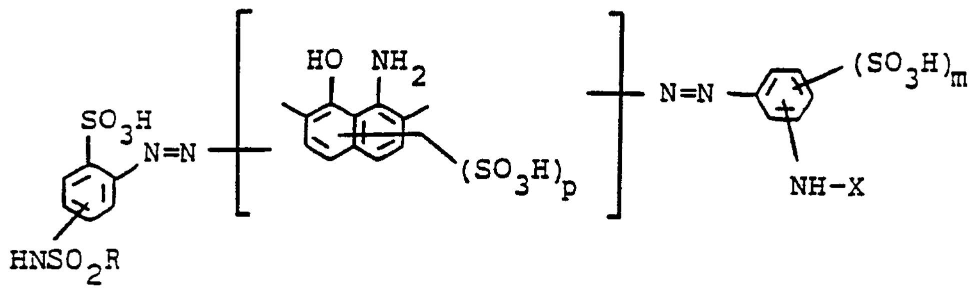

I a

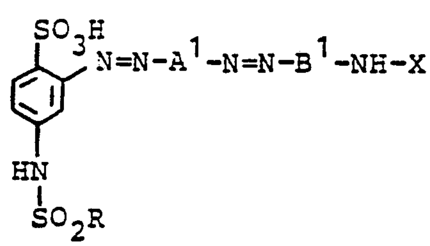

I b ,

in denen

R, p und X die angegebene Bedeutung haben,

m die Zahlen 0, 1 oder 2 und

$A^1$ und $B^1$ unabhängig voneinander einen Rest der Anilin- oder 1-Naphthylaminreihe bedeuten.

Besonders bevorzugt sind für

R: $C_2H_5$, $C_3H_7$, $C_4H_9$, $N(C_3H_7)_2$ oder $N(C_4H_9)_2$ und insbesondere $CH_3$, $N(CH_3)_2$ oder $N(C_2H_5)_2$,

X: Triazin-, Pyrimidin- oder 4-Fluorpyridazonreste, sowie Kombinationen von Triazin- mit Vinylsulfonylanilin- oder β-Sulfatoethylsulfonylbenzylaminresten,

p: 2,

m: 1 oder 2,

$A^1$: 1-Amino-, 1-Amino-6-sulfo- oder 1-Amino-7-sulfonaphthyl-4,

$B^1$: 1-Amino-6-, 7- oder 8-sulfonaphthyl-4- oder 1-Amino-6,8-disulfonaphthyl-4.

Aus der CH—A—473 202 sind Reaktivfarbstoffe bekannt, die u.a. durch Kuppeln von diazotiertem m-Dichlorethylsulfonylanilin und H-Säure, deren Aminogruppe den 2,5-Dimethyl-4-chlorphenylsulfonylrest aufweist, hergestellt werden.

Beispiel 1

Zu einer Suspension von 58,1 Teilen des sekundären Kondensationsproduktes aus 1-Amino-8-hydroxynaphthalin-3,6-disulfonsäure, Cyanurchlorid und N-Methylanilin in Eiswasser gibt man 26,6 Teile salzsauer diazotierter 2-Amino-4-methylsulfonylamino-benzolsulfonsäure. Unter Zugabe von 27,5 Teilen Natriumacetat wird bei 0—5°C und essigsaurem pH-Wert gekuppelt. Der Farbstoff wird aus neutraler Lösung bei Raumtemperatur durch Zugabe von Siedesalz gefällt und getrocknet. Man erhält ein dunkelrotes Pulver, das Baumwolle in brillanten blaustichig roten Tönen mit guter Lichtechtheit färbt.

In Tabelle I sind weitere erfindungsgemäße Farbstoffe aufgeführt, die in ähnlicher Weise wie in Beispiel 1 erhalten werden, indem Cyanurchlorid mit den in Spalte II und III angegebenen Verbindungen kondensiert und das erhaltene Produkt mit diazotierter 2-Amino-4-alkylsulfonylaminobenzolsulfonsäure gekuppelt wird, wobei in Spalte I die Art des Alkylsubstituenten angegeben ist.

Tabelle I

| Bsp. | I | II | III | Farbton |
|---|---|---|---|---|
| 2 | $CH_3$ | 2-Amino-5-hydroxynaphthalin-7-sulfonsäure | 3-Aminobenzolsulfonsäure | orange |
| 3 | " | 1-(2′-Sulfo-5′-aminophenyl)-3-carboxypyrazolon-5 | $NH_3$ | gelb |
| 4 | " | 1-(2′-Sulfo-4′-aminophenyl)-3-carboxypyrazolon-5 | " | " |
| 5 | " | 1-(2′-Methyl-5′-aminophenyl)-3-carboxypyrazolon-5 | 4-Aminobenzolsulfonsäure | " |
| 6 | " | 1-(4′-Aminophenyl)-3-methylpyrazolon-5 | 2-Aminobenzol-1,4-disulfonsäure | " |
| 7 | " | 1-(2′-Aminoethyl)-4-methyl-5-cyan-6-hydroxypyridon-2 | 3-Aminobenzolsulfonsäure | " |
| 8 | " | 1-(2′-Aminoethyl)-4-methyl-5-aminocarbonyl-6-hydroxypyridon-2 | $NH_3$ | " |
| 9 | " | " | 4-(ß-Sulfatoethylsulfonyl)-benzylamin | " |
| 10 | " | 1-(4′-Aminophenyl)-3-methyl-pyrazolon-5 | 3-(ß-Sulfatoethylsulfonyl)-anilin | " |

Beispiel 11

26,6 Teile 2-Amino-4-ethylsulfonylaminobenzolsulfonsäure werden wäßrig salzsauer diazotiert und bei pH 4—5 auf 23 Teile 1-Aminonaphthalin-8-sulfonsäure gekuppelt. Dann werden 20 Teile Cyanurchlorid, die in 200 Teilen Eiswasser dispergiert wurden hinzugefügt. Die Mischung wird bei pH 7 gerührt bis keine

freien Aminogruppen mehr nachweisbar sind. Dann werden bei 35°C 40 Teile 25%iger Ammoniak zugetropft. Nach 2 Stunden wird der Farbstoff mit Kaliumchlorid abgeschieden und getrocknet. Er entspricht der Formel

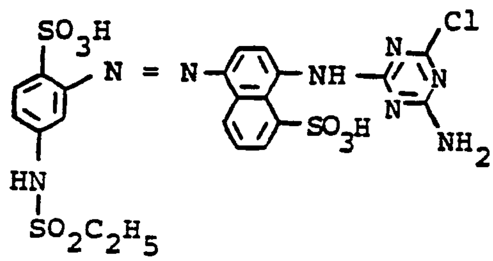

und färbt Baumwolle in echten, goldgelben Nuancen.

Weitere erfindungsgemäße Farbstoffe sind in Tabelle II aufgeführt, wobei in Spalte I die anstelle von 1-Aminonaphthalin-8-sulfonsäure verwendete Kupplungskomponente, in Spalte II das verwendete Acylierungsmittel, in Spalte III das Ammoniak entsprechende Nucleophil aufgeführt sind und R den Alkylsubstituenten der verwendeten 2-Amino-4-alkylsulfonylaminobenzolsulfonsäure definiert.

Tabelle II

| Bsp. | R | I | II | III | Farbton |
|---|---|---|---|---|---|
| 12 | $CH_3$ | 1-Aminonaphthalin-6-sulfonsäure | Cyanurchlorid | $NH_3$ | goldgelb |
| 13 | " | 1-Aminonaphthalin-8-sulfonsäure | Cyanurfluorid | 2-Aminotoluol | " |
| 14 | " | 3-Aminophenylharnstoff | Cyanurchlorid | 4-β-Sulfatoethylsulfonylbenzylamin | " |
| 15 | $N(CH_3)_2$ | 3-(3'-Sulfopropionylamino)anilin | " | $NH_3$ | " |
| 16 | $CH_3$ | 1-Aminonaphthalin-8-sulfonsäure | " | 3-(β-Sulfatoethylsulfonyl)-anilin | " |

Beispiel 17

Zu einer wäßrigen Lösung von 46,7 Teilen des primären Kondensationsproduktes aus 1-Amino-8-hydroxynaphthalin-3,6-disulfonsäure und Cyanurchlorid gibt man bei 0—5°C 26,6 Teile salzsauer

diazotierter 2-Amino-4-methylsulfonylamino-benzolsulfonsäure. Unter portionweiser Zugabe von insgesamt 16,4 Teilen Natriumacetat und 12,5 Teilen Natriumbikarbonat wird bei 0—5°C essigsauer ausgekuppelt. Zum Reaktonsgemisch des Dichlortriazinfarbstoffs gibt man eine 60°C warme wäßrige Lösung von 5,2 Teilen 1,4-Phenylendiamin, erwärmt auf 40—50°C und hält bis zum Ende der Reaktion durch Zugabe von 24 Teilen Natriumcarbonat einen pH-Wert von 6. Der Farbstoff wird aus neutraler Lösung bei Raumtemperatur mit Siedesalz gefällt und getrocknet. Man erhält ein dunkelrotes Pulver, das Baumwolle in brillanten blaustichig roten Tönen mit guter Lichtechtheit färbt. Der Farbstoff entspricht der Formel:

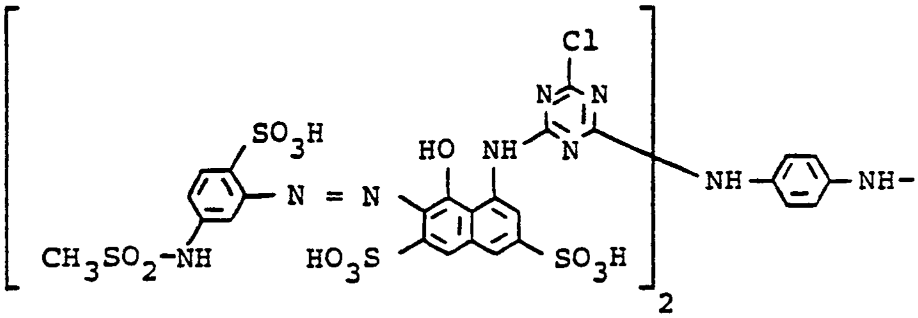

Beispiel 18 und 19

Verwendet man anstelle des in Beispiel 17 eingesetzten 1,4-Phenylendiamins 5,2 Teile 1,2- oder 1,3-Phenylendiamin, so erhält man Farbstoffe mit ähnlich guten Eigenschaften.

Beispiel 20

Zu einer Lösung von 59 Teilen des roten Monoazofarbstoffs, der erhalten wurde durch saure Kupplung von salzsauer diazotierter 2-Amino-4-methylsulfonylamino-benzolsulfonsäure auf 1-Amino-8-hydroxynaphthalin-3,6-disulfonsäure, werden 33,6 Teile des salzsauer diazotierten primären Kondensationsproduktes aus Cyanurchlorid und 1,3-Phenylendiamin-4-sulfonsäure gegeben. Man kuppelt bei 0—5°C unter Zugabe von 23 Teilen Natriumcarbonat bei pH 6 bis 7 aus, fügt eine wäßrig neutrale Lösung von 17,3 Teilen 3-Aminobenzolsulfonsäure zu und erwärmt auf 40—50°C. Der pH-Wert der Kondensation wird durch 17 Teile Natriumcarbonat bei 6 bis 7 gehalten. Aus neutraler Lösung wird der Farbstoff durch Zugabe von Siedesalz gefällt und getrocknet. Man erhält ein schwarzes Pulver, das Baumwolle in marineblauen Tönen mit guter Licht- und Naßechtheit färbt. Der Farbstoff entspricht der allgemeinen Formel

Formel

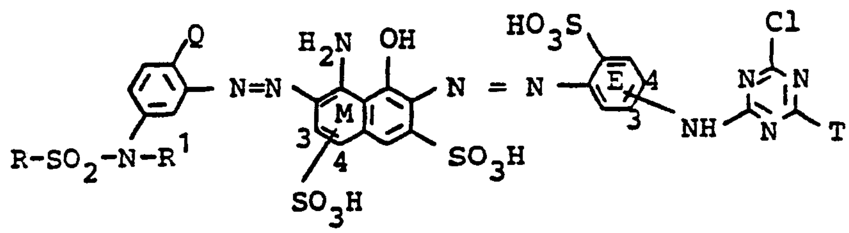

,

in der R = Methyl, $R^1$ = Wasserstoff, Q = Hydroxysulfonyl und T = 3-Sulfophenylamino bedeutet, der Triazinylaminorest mit dem Ring E in 3-Stellung verknüpft und die Sulfogruppe im Ring M in 3-Stellung gebunden ist.

Weitere erfindungsgemäße Farbstoffe sind in Tabelle III aufgeführt:

Tabelle III

| Bsp. | R | $R^1$ | Q | Verknüpfung Ring E | Stellung Ring M | T | Farbton |
|---|---|---|---|---|---|---|---|
| 21 | $CH_3$ | H | $SO_3H$ | 1,3- | 3- | $-NH_2$ | marineblau |
| 22 | $CH_3$ | H | $SO_3H$ | 1,3- | 3- | 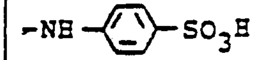 | marineblau |
| 23 | $CH_3$ | H | $CH_3$ | 1,3- | 3- | $-NH_2$ | marineblau |
| 24 | $CH_3$ | $CH_3$ | H | 1,3- | 3- | $-NH_2$ | marineblau |
| 25 | $CH_3$ | H | H | 1,3- | 3- | $-NH_2$ | marineblau |
| 26 | $CH_3$ | $CH_3$ | H | 1,3- | 3- | 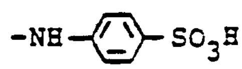 | marineblau |
| 27 | $CH_3$ | $CH_3$ | $SO_3H$ | 1,3- | 3- | $-NH_2$ | marineblau |
| 28 | $CH_3$ | $CH_3$ | $SO_3H$ | 1,3- | 3- | 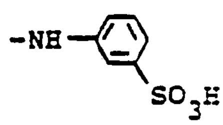 | marineblau |
| 29 | $CH_3$ | $CH_3$ | $SO_3H$ | 1,3- | 3- | 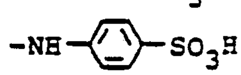 | marineblau |
| 30 | $(CH_3)_2N$ | H | $SO_3H$ | 1,3- | 3- | $-NH_2$ | marineblau |
| 31 | $(CH_3)_2N$ | H | $SO_3H$ | 1,3- | 3- | 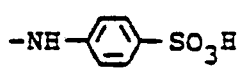 | marineblau |
| 32 | $(CH_3)_2N$ | H | $SO_3H$ | 1,3- | 3- | 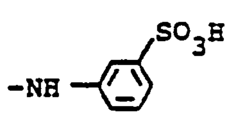 | marineblau |

Beispiel 33

Zu 32 Teilen des salzsauer diazotierten sekundären Kondensationsproduktes aus 1,3-Phenylendiamin-4-sulfonsäure, Cyanurchlorid und Ammoniak wird eine wäßrige Lösung von 31,3 Teilen 1-Amino-8-hydroxynaphthalin-3,6-disulfonsäure gegeben. Man kuppelt bei 0—5°C unter Zusatz von Natriumacetat aus und fügt zum erhaltenen roten Monoazofarbstoff eine wäßrige Lösung von 30,5 Teilen salzsauer diazotierter 2-Amino-4-(N,N-dimethylaminosulfonyl)-amino-benzolsulfonsäure. Durch Zugabe von 27,8 Teilen Natriumcarbonat wird neutral ausgekuppelt und der Farbstoff aus dem Reaktionsgemisch mit Natriumchlorid abgeschieden und getrocknet. Man erhält ein schwarzes Pulver, das Baumwolle in rotstichig marineblauen Tönen mit guter Licht- und Naßechtheit färbt. Der Farbstoff entspricht der allgemeinen Formel

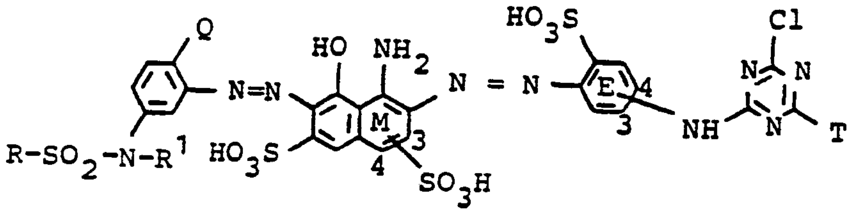 ,

in der R = Dimethylamino, R[1] = Wasserstoff, Q = Hydroxysulfonyl, T = Amino, der Triazinylaminorest mit dem Ring E in 3-Stellung verknüpft und die Sulfogruppe im ring M in 3-Stellung gebunden ist.

Weitere erfindungsgemäße Beispiele finden sich in Tabelle IV.

Tabelle IV

| Bsp. | R | $R^1$ | Q | Verknüpfung Ring E | Stellung Ring M | T | Farbton |
|---|---|---|---|---|---|---|---|
| 34 | $(CH_3)_2N$ | H | $SO_3H$ | 1,3- | 3- | 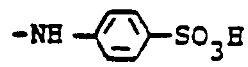 | rotst. marine-blau |
| 35 | $(CH_3)_2N$ | H | $SO_3H$ | 1,3- | 3- | 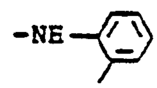 | rotst. marine-blau |
| 36 | $(CH_3)_2N$ | H | $SO_3H$ | 1,3- | 3- | 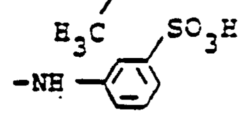 | rotst. marine-blau |
| 37 | $(CH_3)_2N$ | $CH_3$ | $SO_3H$ | 1,3- | 3- | $-NH_2$ | rotst. marine-blau |
| 38 | $(CH_3)_2N$ | $CH_3$ | $SO_3H$ | 1,3- | 3- | 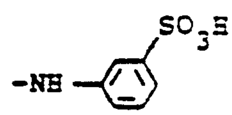 | rotst. marine-blau |
| 39 | $(CH_3)_2N$ | $CH_3$ | $SO_3H$ | 1,3- | 3- | 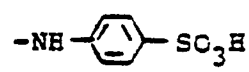 | rotst. marine-blau |
| 40 | $CH_3$ | H | H | 1,3- | 3- | $-NH_2$ | rotst. marine-blau |
| 41 | $CH_3$ | H | H | 1,3- | 3- | 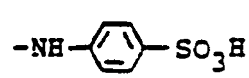 | rotst. marine-blau |
| 42 | $CH_3$ | $CH_3$ | H | 1,3- | 3- | $-NH_2$ | rotst. marine-blau |
| 43 | $CH_3$ | $CH_3$ | H | 1,3- | 3- | 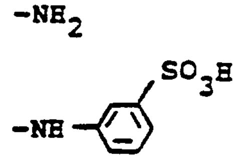 | rotst. marine-blau |

Beispiel 44

26,6 Teile 2-Amino-4-methylsulfonylaminobenzolsulfonsäure werden wäßrig salzsauer diazotiert und bei pH 2—3 auf 22,3 Teile Clevesäure-6 gekuppelt. Der erhaltene Monoazofarbstoff wird mit Natronlauge bei pH 8—9 gelöst und mit 30 Teilen 3,33 N-Natriumnitritlösung und 70 Teilen 5 N-Salzsäure versetzt. Nach 2 Stunden wird der Nitritüberschuß mit Amidosulfonsäure zerstört und es wird bei pH 3 auf 22,3 Teile Clevesäure-7 gekuppelt. Dann wird mit 19 Teilen Cyanurchlorid, die in 180 Teilen Eiswasser dispergiert wurden, bei pH 6—7 acyliert. Die entstandene Suspension wird bei 35—40°C mit 40 Teilen 25%igem Ammoniak versetzt und 2 Stunden gerührt. Der durch Aussalzen mit Kaliumchlorid erhaltene Farbstoff wird getrocknet und fäßt Baumwolle in echten, rotstichig braunen Nuancen. Er entspricht der Formel:

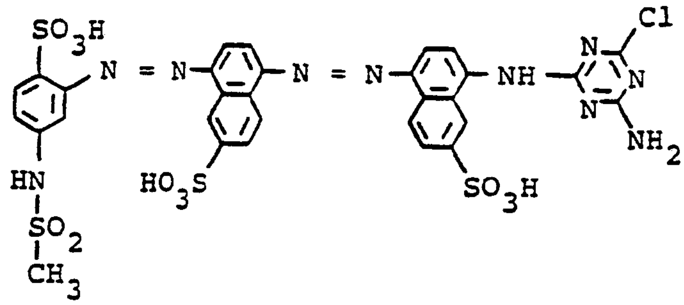

Weitere erfindungsgemäße Farbstoffe sind in Tabelle V aufgeführt, wobei in Spalte I bzw. II die anstelle von Clevesäure-6 bzw. Clevesäure-7 verwendeten Kupplungskomponenten, in Spalte III das verwendete Acylierungsmittel und in Spalte IV das Ammoniak entsprechende Nucleophil aufgeführt sind. R bezieht sich auf die Formel Ib und definiert die gegebenenfalls anstelle von 2-Amino-4-methylsulfonylamino-benzolsulfonsäure verwendete Startkomponente:

Tabelle V

| Bsp. | R | I | II | III | IV | Farbton |
|---|---|---|---|---|---|---|
| 45 | $CH_3$ | 1-Aminonaphthalin-6-sulfonsäure | 1-Aminonaphthalin-6-sulfonsäure | Cyanurchlorid | $NH_3$ | rotstichig braun |
| 46 | $C_2H_5$ | " | 1-Aminonaphthalin-6/7-sulfonsäure | " | " | " |
| 47 | $CH_3$ | " | 1-Aminonaphthalin-8-sulfonsäure | " | " | " |
| 48 | $CH_3$ | 1-Aminonaphthalin-6/7-sulfonsäure | 1-Aminonaphthalin-6-sulfonsäure | " | " | " |
| 49 | $C_2H_5$ | " | 1-Aminonaphthalin-7-sulfonsäure | " | " | " |
| 50 | $CH_3$ | " | 1-Aminonaphthalin-8-sulfonsäure | " | " | " |
| 51 | $n-C_3H_7$ | " | " | " | " | " |

| Bsp. | R | I | II | III | IV | Farbton |
|---|---|---|---|---|---|---|
| 52 | n-$C_4H_9$ | " | 1-Aminonaphthalin-6/7-sulfonsäure | " | " | " |
| 53 | $CH_3$ | " | m-Aminophenylharnstoff | " | " | " |
| 54 | $CH_3$ | 1-Aminonaphthalin-6-sulfonsäure | 1-Aminonaphthalin-6-sulfonsäure | Cyanurfluorid | " | " |
| 55 | $CH_3$ | " | " | " | o-Toluidin | " |
| 56 | $CH_3$ | " | " | 2,3-Dichlorchinoxalin-6-carbonsäurechlorid | - | " |
| 57 | $CH_3$ | 1-Aminonaphthalin-6-sulfonsäure | 1-Aminonaphthalin-6-sulfonsäure | 5-Chlor-2,4-difluor-6-methylpyrimidin | - | rotstichig braun |
| 58 | $CH_3$ | " | 1-Aminonaphthalin-6,8-disulfonsäure | Cyanurchlorid | $NH_3$ | " |
| 59 | $CH_3$ | 1-Aminonaphthalin | " | " | $NH_3$ | " |
| 60 | $CH_3$ | 1-Aminonaphthalin-6-sulfonsäure | 1-Amino-8-hydroxynaphthalin-3,6-disulfonsäure | " | Cl | rotstichig blau |
| 61 | $CH_3$ | " | " | " | N-Methylanilin | " |
| 62 | $CH_3$ | " | 1-Aminonaphthalin-6-sulfonsäure | " | Anilin-4-sulfonsäure | rotstichig braun |

| Bsp. | R | I | II | III | IV | Farbton |
|---|---|---|---|---|---|---|
| 63 | $CH_3$ | 1-Aminonaphthalin-6-sulfonsäure | 1-Aminonaphthalin-6-sulfonsäure | Cyanurchlorid | Anilin-2-sulfonsäure | rotstichig braun |
| 64 | $CH_3$ | " | " | " | 4-(β-Sulfatoethylsulfonyl)-benzylamin | " |
| 65 | $CH_3$ | 1-Aminonaphthalin-6-sulfonsäure | 1-Aminonaphthalin-6-sulfonsäure | Cyanurchlorid | 3-(β-Sulfatoethylsulfonyl)-anilin- | rotstichig braun |
| 66 | $C_2H_5$ | " | 1-Aminonaphthalin-7-sulfonsäure | " | " | " |
| 67 | $CH_3$ | " | 1-Aminonaphthalin-8-sulfonsäure | " | " | " |

**Patentansprüche**

1. Verbindungen der Formel

$$\left[ R^1-\underset{\underset{SO_2-R}{|}}{N}-D-N=N-\left[A-N=N\right]_n-B \right]_p X ,$$

in der

n die Zahlen 0 oder 1,
p die Zahlen 1 oder 2,
A den Rest einer Kupplungskomponente,
B den Rest einer Diazo- oder Kupplungskomponente,
D den Rest einer Diazokomponente,
R Alkyl, Alkenyl, Cycloalkyl, Aryl oder disubstituiertes Amino,

$R^1$ Wasserstoff oder Alkyl und

X mindestens einen reaktiven Rest bedeuten, wobei X für p = 2 der Formel —$X^1$—G—$X^2$— entspricht, in der $X^1$ und $X^2$ reaktive Reste und G ein Brückenglied, das sich von einem aliphatischen, aromatischen oder araliphatischen Diamin ableitet, sind.

2. Verbindungen gemäß Anspruch 1 der Formeln

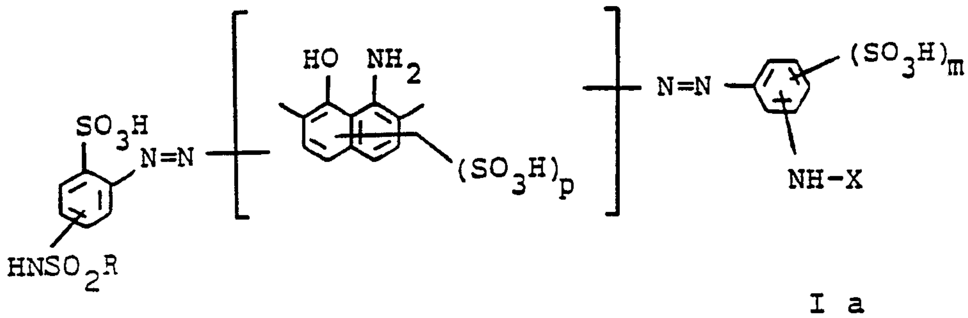

I a

oder

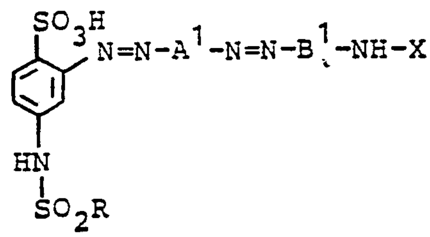

I b ,

in denen

R, p und X die angegebene Bedeutung haben,

m die Zahlen 0, 1 oder 2 und

$A^1$ und $B^1$ unabhängig voneinander einen Rest der Anilin- oder 1-Naphthylaminreihe bedeuten.

3. Verwendung der Verbindungen gemäß Anspruch 1 oder 2 zum Färben von amino- oder hydroxylgruppenhaltigem Textilmaterial.

**Revendications**

1. Composés de formule

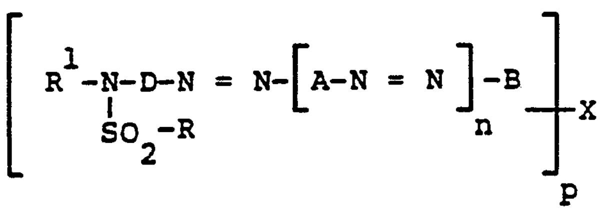

,

dans laquelle

n est le nombre 0 ou 1

p est le nombre 1 ou 2

A est le reste d'un composant de copulation,

B est le reste d'un composant de diazoïque ou de copulation

D est le reste d'un composant de diazoïque

R est un groupement alkyle, alcényle, cycloalkyle, aryle ou amino disubstitué,

$R^1$ est un atome d'hydrogène ou un groupement alkyle, et

X représente au moins un reste réactif, X correspondant à —$X^1$—G—$X^2$— quand p = 2, $X^1$ et $X^2$ étant des restes réactifs et G un chaînon de pontage qui dérive d'une diamine aliphatique, aromatique ou araliphatique.

2. Composés selon la revendication 1, de formule

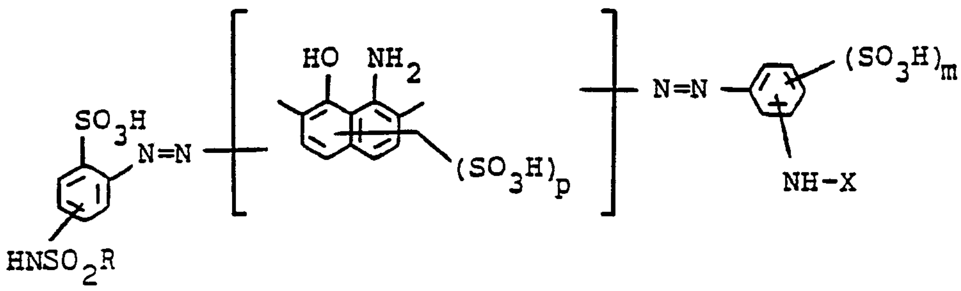

I a

ou

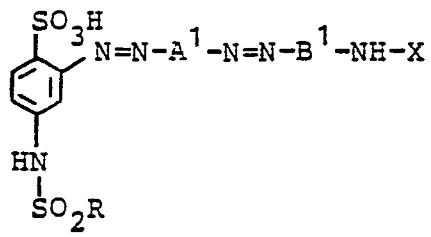

I b ,

dans lesquelles

R, p et X sont tels que définis ci-dessus,

m est le nombre 0, 1 ou 2, et

$A^1$ et $B^1$ représentent indépendamment l'un de l'autre un reste de la série de l'aniline ou de la série de la 1-naphtylamine.

3. Utilisation des composés selon l'une ou l'autre des revendications 1 et 2, pour teindre des matériaux textiles contenant des groupements amino ou hydroxy.

**Claims**

1. A compound of the formula

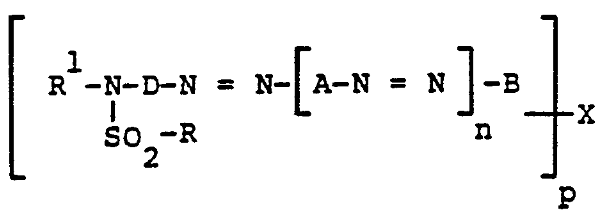

,

where n is 0 or 1, p is 1 or 2, A is a radical of a coupling component, B is a radical of a diazo or coupling component, D is a radical of a diazo component, R is alkyl, alkenyl, cycloalkyl or aryl or disubstituted amino, $R^1$ is hydrogen or alkyl and the radicals X are one or more reactive radicals, and, when p is 2, X corresponds to the formula $—X^1—G—X^2—$, where $X^1$ and $X^2$ are each a reactive radical and G is a bridge member derived from an aliphatic, aromatic or araliphatic diamine.

2. A compound as claimed in claim 1, of the formula

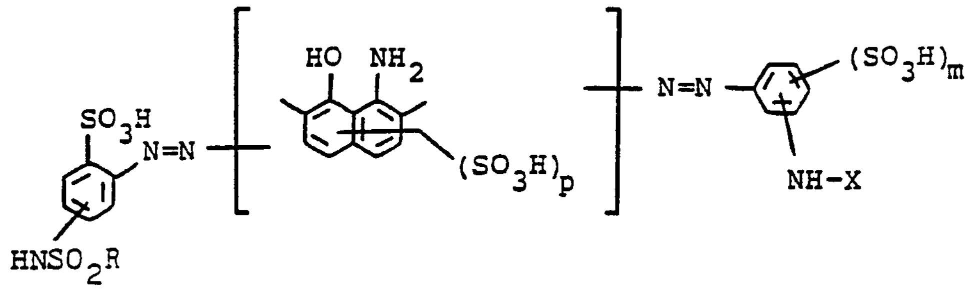

I a

or

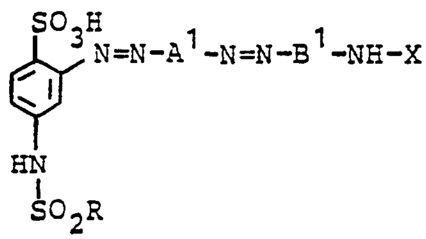

I b ,

where R, p and X have the stated meanings, m is 0, 1 or 2, and $A^1$ and $B^1$ independently of one another are each a radical from the aniline or 1-naphthylamine series.

3. The use of a compound as claimed in claim 1 or 2 for dyeing amino-containing or hydroxyl-containing textile material.